**Europäisches Patentamt**

**European Patent Office**

**Office européen des brevets**

(19)

(11) Veröffentlichungsnummer: **0 114 196**
**B1**

(12) # EUROPÄISCHE PATENTSCHRIFT

(45) Veröffentlichungstag der Patentschrift:
18.05.88

(51) Int. Cl.⁴: **G 01 S 13/66**

(21) Anmeldenummer: **83110252.0**

(22) Anmeldetag: **14.10.83**

(54) **Folgeradar.**

(30) Priorität: **13.01.83 CH 169/83**

(43) Veröffentlichungstag der Anmeldung:
**01.08.84 Patentblatt 84/31**

(45) Bekanntmachung des Hinweises auf die Patenterteilung:
**18.05.88 Patentblatt 88/20**

(84) Benannte Vertragsstaaten:
**CH DE GB IT LI NL**

(56) Entgegenhaltungen:
**DE-A-2 037 192**
**FR-A-2 303 298**
**US-A-3 896 436**

(73) Patentinhaber: **SIEMENS- ALBIS
AKTIENGESELLSCHAFT, EGA1/Verträge und
Patente Postfach, CH- 8047 Zürich (CH)**

(72) Erfinder: **Küpfer, Hanspeter, Altenweg 3, CH- 8142
Uitikon (CH)**
Erfinder: **Schenkel, Paul, Im Spannrain 20, CH-
8105 Watt (CH)**

EP 0 114 196 B1

## Beschreibung

Die vorliegende Erfindung betrifft ein Radargerät gemäss dem Oberbegriff des Patentanspruches 1 bzw. gemäss dem Oberbegriff des Anspruchs 3.

Zur automatischen Verfolgung eines beweglichen Zieles werden bekanntlich Monopuls-Radargeräte mit einem Sender und einer Empfangsvorrichtung eingesetzt, in der aus den empfangenen, kohärent detektierten und gefilterten Echosignalen ein Summensignal und mindestens ein Differenzsignal als Ausgangssignale erzeugt werden, die zur Nachsteuerung der Servos dienen. In einem solchen Monopuls-Radargerät kann jedes dieser Ausgangssignale aus dem Gemisch eines grobgefilterten Dopplernutzsignals und verschiedener unerwünschter Rauschsignale bestehen, die durch systemeigene Frequenzunstabilitäten oder sogenannte Jitter hervorgerufen werden. In diesem Signalgemisch können auch thermische Rauschsignale und andere Rauschsignale vorhanden sein, die infolge von Cluttersignalen auftreten.

Ein derartiges aus der CH-PS 514 848 bekanntes Monopuls-Radargerät ist ferner mit einem gesteuerten Signalgenerator versehen, wobei ein in ihm enthaltener Oszillator so gesteuert wird, dass er ein internes Bezugssignal liefert, dessen Frequenz- und Phase gleich den entsprechenden Werten des grobgefilterten Dopplersignals sind. Zudem ist in diesem Monopuls-Radargerät ein Fehlerdetektor mit einem phasenempfindlichen Detektor, einem Schwellwertschalter und einem Relais mit zwei Kontaktschaltern vorgesehen, mit deren Hilfe dem Bezugssignaleingang des Fehlerdetektors wahlweise entweder das Summensignal oder das interne Bezugssignal zugeführt wird. Dadurch wird das Fehlersignal im ersten Fall ohne und im zweiten Fall mit Unterdrückung der Rauschsignale erzeugt.

Das Monopuls-Radargerät gemäss der genannten CH-PS 514 848 arbeitet in der Weise, dass während der Beginnphase der Zielverfolgung der Bezugssignaleingang des Fehlerdetektors mit dem Summensignal beaufschlagt ist.

Die anderen Ausgangssignale der Empfangsvorrichtung werden zur Erzeugung der Winkel- und Entfernungsfehlersignale dem Fehlerdetektor zugeführt. Die Zielverfolgungsleistung des Systems ist in diesem Fall noch nicht optimal, weil sowohl den Differenzsignalen als auch dem als Bezugssignal benutzten Summensignal das gleiche Rauschen anhaftet, so dass auch die Ausgangssignale des Fehlerdetektors einen bestimmten Fehler aufweisen. Sobald aber das Ziel verfolgt wird, wird ein Frequenzsteuersignal an den Oszillator des Signalgenerators abgegeben. Der Oszillator läuft dann nach Frequenz und Phase auf das im Summensignal des Empfängers enthaltene Dopplersignal ein. Das dabei am Ausgang des Signalgenerators auftretende Signal wird in einem phasenempfindlichen Detektor des Fehlerdetektors mit dem Summensignal verglichen. Solange die verglichenen Signale einen bestimmten Phasenunterschied aufweisen, tritt am Ausgang des Schwellwertschalters eine Ausgangsspannung auf, die bewirkt, dass der Bezugssignaleingang des Fehlerdetektors weiterhin über den einen Kontaktschalter mit dem Summensignal beaufschlagt bleibt. Wenn der Schwellwertschalter keine Ausgangsspannung mehr abgibt, bedeutet dies, dass der Signalgenerator in der Phase eingelaufen ist; die Kontaktschalter werden dann so umgeschaltet, dass das vom Signalgenerator gelieferte interne Bezugssignal über den anderen Kontaktschalter dem Bezugssignaleingang des Fehlerdetektors zugeführt wird.

Der Vorteil dieses Monopulsradar-Gerätes besteht darin, dass das innere Bezugssignal rauscharm ist. Es hat daher als Bezugssignal kaum noch Frequenzkomponenten, die den Störkomponenten der Differenzsignale des Empfängers entsprechen. Dadurch werden die Störkomponenten der Ausgangssignale des Fehlerdetektors verkleinert. Ein gravierender Nachteil des bekannten Monopulsgerätes besteht aber darin, dass in der Praxis bei schwierigen oder stark gestörten Signalverhältnissen die Bedingung eines genügend kleinen Phasenunterschiedes durch den angegebenen Signalgenerator kaum oder überhaupt nicht erfüllt werden kann, so dass dann der Fehlerdetektor mit dem Summensignal beaufschlagt wird und die oben beschriebene nicht optimale Betriebsart auftritt.

Der Zweck der vorliegenden Erfindung besteht nun darin, ein solches Folge-Radargerät dahin zu verbessern, dass auch bei schwierigen und stark gestörten Signalverhältnissen eine Rauschunterdrückung gewährleistet wird, wobei das Radargerät grundsätzlich auch mit Kegelabtastung (conical scanning) arbeiten können soll.

Die vorliegende Erfindung zeigt nun einen Weg, um die gestellte Aufgabe in einer besonders vorteilhaften Weise zu lösen. Dies gelingt erfindungsgemäss durch die im kennzeichnenden Teil des Patentanspruchs 1 bzw. des Patentanspruchs 3 angegebenen Massnahmen. Vorteilhafte Ausgestaltungen der Erfindung sind in weiteren Ansprüchen angegeben.

Der Vorteil eines Folgeradars gemäss der Erfindung besteht darin, dass die Phase des Bezugssignals nicht gleich dem grobgefilterten Dopplersignal sein muss, und dass keine Phasensteuerungskette und keine Schaltmittel für das Bezugssignal notwendig sind. Die Erfindung wird nachfolgend durch Beschreibung von Ausführungsbeispielen anhand von Zeichnungen näher erläutert. Es zeigt:

Fig.1 das Blockschaltbild eines Folgeradars mit Kegelabtastung (conical scanning) und Quadraturkanal,

Fig.2 das Blockschaltbild eines Distanzservos mit zwei Integratoren und einem Zeitmodulator,

Fig.3 das Blockschaltbild einer Video-Doppler-Schaltung mit Quadraturkanal,

Fig.4 das Blockschaltbild eines Signalgenerators mit Auswertung des Quadratursignals,

Fig. 5 das Blockschaltbild eines Fehlerdetektors mit Auswertung der Quadratursignale und mit einem Frequenzfehlerdetektor für die Steuerung der Bandbreite verschiedener Filter,

Fig.6 das Blockschaltbild eines Monopuls-Folgeradars mit Quadraturkanal,

Fig.7 das Blockschaltbild eines Fehlerdetektors zu einem solchen Monopuls-Folgeradar mit Quadraturkanal.

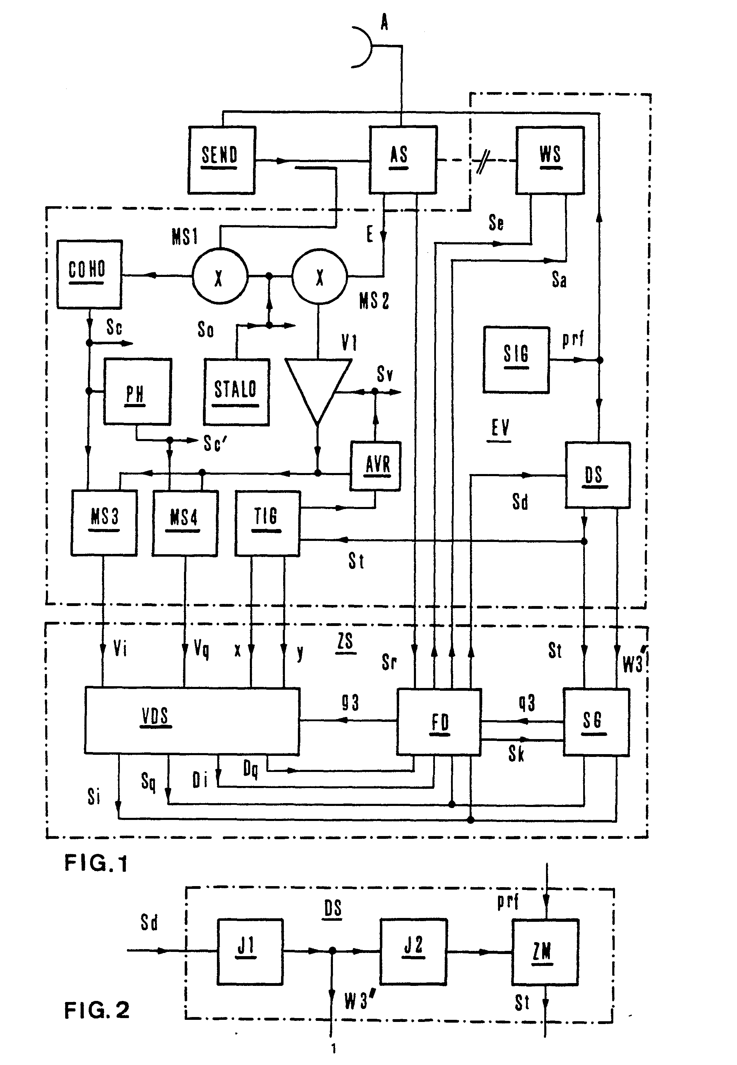

In Fig.1 sind die Antenne A, die Antennenschaltung AS, der Sender SEND, die Empfangsvorrichtung EV und eine Zwischenstufe ZS eines Kegelabtast-Folgeradars mit Quadraturkanal im Blockschaltbild dargestellt. Zur Empfangsvorrichtung EV gehören auch das Winkelservo WS und das Distanzservo DS. Die Empfangsvorrichtung EV weist zwei Mischer MS1 und MS2 auf. Im ersten Mischer MS1 werden das Ausgangssignal So eines stabilen Oszillators STALO und ein ausgekoppeltes Signal vom Sender SEND gemischt und das gefilterte Mischprodukt dem Eingang eines Kohärenzoszillators COHO zugeführt, der ein Ausgangssignal Sc abgibt. Der zweite Mischer MS2 mischt das Signal So und ein von der Antennenschaltung AS abgeleitetes Empfangssignal E, wobei sein gefiltertes Ausgangssignal in einem Zwischenfrequenzverstärker V1 verstärkt wird, dessen Ausgang mit den Eingängen zweier Mischer MS3 und MS4 verbunden ist. Dabei ist der andere Eingang des Mischers MS3 mit dem Signal Sc und der andere Eingang des Mischers MS4 mit dem Ausgangssignal eines dem Kohärenz-Oszillator COHO nachgeschalteten 90°-Phasenschiebers PH beaufschlagt. Zur Steuerung des Verstärkers V1 ist ein Regler AVR vorgesehen, dessen Steuereingang an einen Ausgang eines Torimpuls-Generators TIG angeschlossen ist.

Die Empfangsvorrichtung EV weist zudem einen Synchron-Impuls-Generator SIG auf, der das Pulsrepetitionsfrequenz-Signal prf für den Sender SEND und für das Distanz-Servo DS liefert. Die Zwischenstufe ZS umfasst eine Video-Doppler-Schaltung VDS, einen Signalgenerator SG und einen Fehlerdetektor FD, der die Steuersignale Sd und Se, Sa für die Servos DS bzw. WS bereitstellt. Die Schaltung VDS ist eingangsseitig mit den Video-Ausgangssignalen Vi und Vq der Mischer MS3 bzw. MS4, mit einem vom Fehlerdetektor FD gelieferten zu regelnden Signal g3 und mit zwei Torimpulssignalen x, y beaufschlagt. Die Schaltung VDS liefert zwei Summen-Dopplersignale Si, Sq für den Fehlerdetektor FD und für den Signalgenerator SG sowie zwei Differenz-Dopplersignale Di, Dq für den Fehlerdetektor FD, der zusätzlich ein Referenzsignal Sr aus der Antennenschaltung AS und ein Bezugssignal q3 (statt sin q3) aus dem Signalgenerator SG empfängt, wobei das hier verwendete Signal q3 andere Bedingungen erfüllt als das entsprechende Signal gemäss der CH-PS 514 848. Der Signalgenerator SG wird zudem eingangsseitig mit einem Steuersignal W3" des Distanzservos DS beaufschlagt.

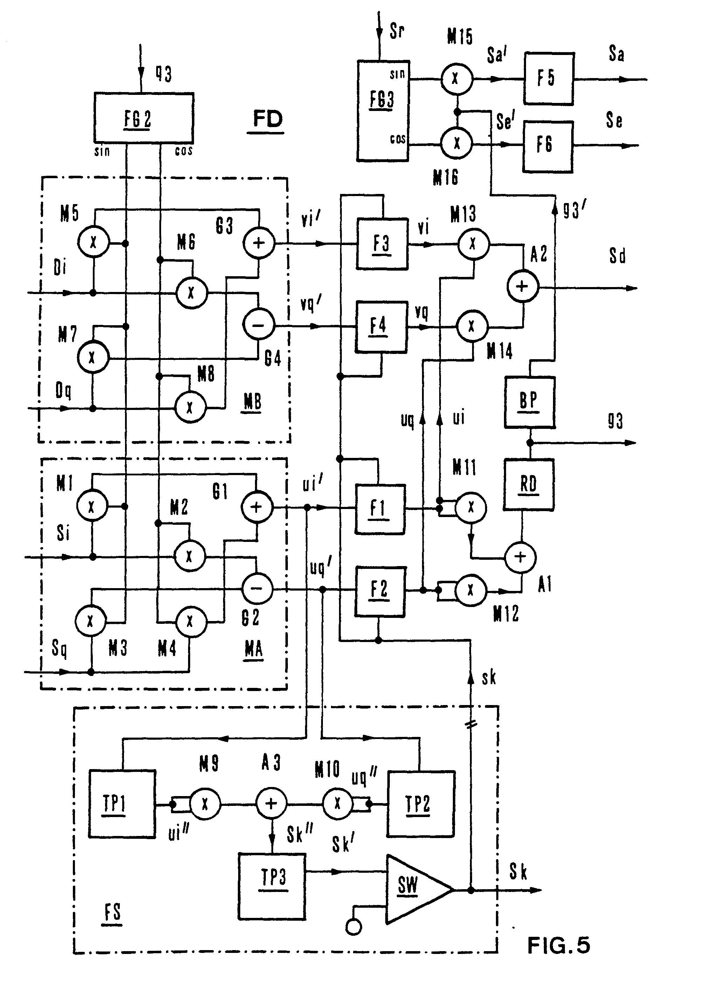

Die Arbeitsweise eines Folgeradars nach Fig.1 ist prinzipiell bekannt und wird daher hier nicht in Einzelheiten beschrieben. Zur Darstellung des erfindungsgemässen Folgeradars wurde der Einfachheit halber ein empfangskohärent arbeitendes Impuls-Doppler-Radarsystem ausgewählt. Die Erfindung kann jedoch auch in vollkohärenten Radargeräten genau gleich Anwendung finden. Die Antenne A, der Sender SEND und die Empfangsvorrichtung EV können bekannter Konstruktion sein und eine bekannte Wirkungsweise besitzen. In der Zwischenstufe ZS hingegen muss mindestens ein Fehlerdetektor FD gemäss der Erfindung (Fig.5) eingesetzt werden.

Das Distanz-Servo DS nach Fig.2 weist die Reihenschaltung zweier Integratoren J1 und J2 und eines Zeitmodulators ZM auf, der ein Steuersignal St für den Torimpulsgenerator TIG und den Signalgenerator SG (Fig. 1) liefert, wobei der erste Integrator J1 eingangsseitig mit dem Ausgangssignal Sd des Distanz-Fehlerdetektors FD beaufschlagt ist und ausgangsseitig das Geschwindigkeitssignal W3" für den Signalenerator SG (Fig. 1) abgibt. Der Zeitmodulator ZM ist mit einem weiteren Eingang für das Signal prf versehen. Das Distanz-Servo kann beispielsweise auch als Kalman-Filter aufgebaut sein.

Die Arbeitsweise des Distanz-Servos nach Fig.2 ist aus der CH- PS 514 848 bekannt und braucht daher hier nicht nochmals beschrieben zu werden.

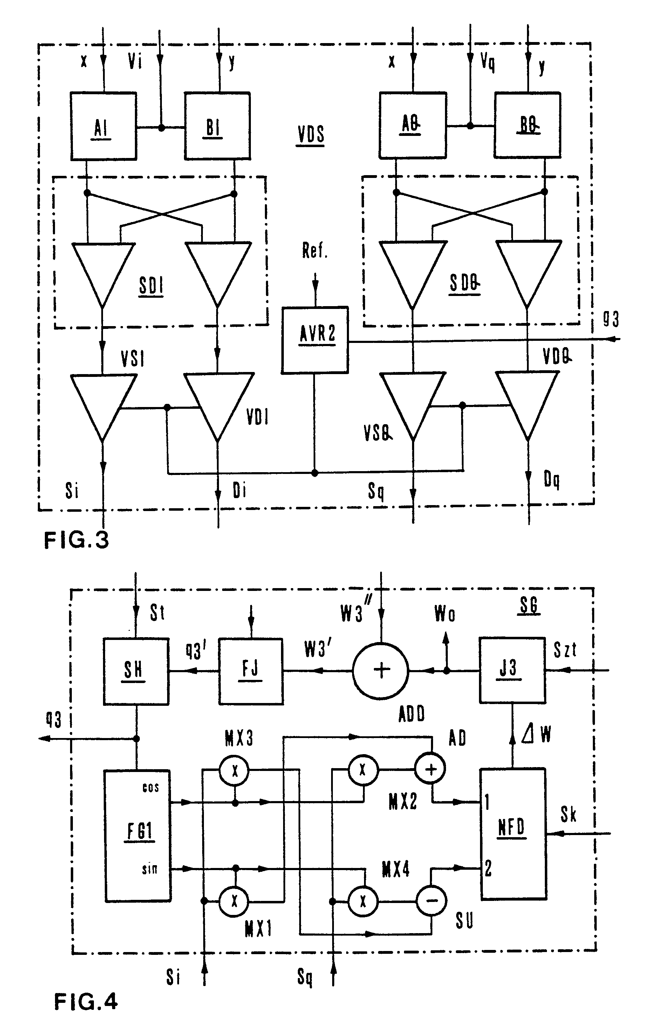

Die Video-Doppler-Schaltung VDS nach Fig.3 weist zwei mit Dopplerfiltern versehene Inphasen-Impulsdehnungs-Schaltungen (Boxcar-Schaltungen) A1 und B1 auf, die eingangsseltig gemeinsam mit dem Inphasen-Signal Vi des Mischers MS3 (Fig. 1) und je mit dem Ausgangssignal x bzw. y des Torimpuls-Generators TIG beaufschlagt sind. Der Ausgang der Boxcar-Schaltung A1 ist mit einem ersten Eingang einer Schaltung SDI und der Ausgang der Boxcar-Schaltung B1 mit dem zweiten Eingang der Schaltung SDI verbunden, in der Summen- und Differenzsignale gebildet und in je einem nachgeschalteten Verstärker VS1 und VDI verstärkt werden. Entsprechendes gilt für zwei Quadratur-Boxcar-Schaltungen AQ und BQ, eine Schaltung SDQ zur Bildung der Summen- und Differenz-Quadratursignale und zweier nachgeschalteter Quadraturverstärker VSQ und VDQ. Das Signal g3 wird über die regelbaren Verstärker VSI, VDI, VSQ und VDQ, die die Signale Si, Di, Sq bzw. Dq liefern, durch einen AVR-Regler AVR2 auf eine Referenzspannung geregelt. Die Arbeitsweise der Video-Doppler-Schaltung nach Fig.3 ist im Prinzip ebenfalls bekannt (Vgl. z. B. EP-PS-0 014 242 und CH-PS-514 848). Diese Schaltung kann auch anders aufgebaut sein, indem beispielsweise die Summensignale aus einer einzigen, zeitlich zentralen Abtastung gewonnen werden.

Der als Frequenzschloss-Schaltung arbeitende Signalgenerator SG nach Fig.4 weist eine Abtast- und Halteschaltung SH auf, die eingangsseitig mit dem Signal St getastet ist und das Bezugssignal q3 liefert. Im Signalgenerator SG ist auch ein Funktionsgenerator FG1 vorhanden, der aus dem Signal q3 die Signale sin q3 und cos q3 erzeugt, wobei in einem ersten Mischer MX1 das Signal sin q3 mit dem Signal Si und in einem zweiten Mischer MX2 das Signal cos q3 mit dem Signal Sq multipliziert werden. Zugleich werden in einem dritten Mischer MX3 die Signale cos q3 und Si und in einem vierten Mischer MX4 die Signale sin q3 und Sq miteinander multipliziert. Die Ausgangssignale der Mischer MX1 und MX2 werden durch einen Addierer AD zusammengefasst und dem ersten Eingang eines Nullfrequenz-Diskriminators NFD zugeführt. Entsprechend werden die Ausgangssignale der Mischer MX3 und MX4 in einem Subtrahierer SU subtrahiert und dem zweiten Eingang des Diskriminators NFD zugeführt, der beispielsweise aus einem Subtrahierer, zwei Multiplikatoren für je ein Quadratur- und ein Inphasen-Signal und zwei Filtern bestehen kann (Vgl. z. B. Nullfrequenz-Diskriminator FDK in Fig.3 der EP-PS-0 014 242). Dabei kann der Diskriminator NFD einen weiteren Eingang für ein Signal Sk zur Steuerung der Parameter der vorhandenen Filter aufweisen. Der Ausgang des Diskriminators NFD ist gegebenenfalls über einen Integrator J3 mit dem einen Eingang eines Addierers ADD verbunden, dessen anderer Eingang mit dem Geschwindigkeitssignal W3" vom Distanz-Servo DS beaufschlagt ist, wobei die Anfangsbedingungen und die Zeitkonstante des Integrators J3 durch ein Signal Szt gesteuert werden können. Der Ausgang des Addierers ADD ist über einen Frequenzintegrator FJ an den Signaleingang der Schaltung SH angeschlossen.

Der Fehlerdetektor FD gemäss Fig.5 weist zwei Funktionsgeneratoren FG2 und FG3 auf, die ähnlich wie der Generator FG1 (Fig.4) aufgebaut sind und die Signale sin q3, cos q3 bzw. sin Sr, cos Sr abgeben, wobei Sr ein Mass für die momentane Phasenlage der Kegelabtastung darstellt. Im Fehlerdetektor sind zudem zwei Mischereinheiten MA und MB vorhanden, die folgende Signale abgeben:

$$ui' = Si \cdot \sin q3 + Sq \cdot \cos q3$$
$$uq' = Si \cdot \cos q3 - Sq \cdot \sin q3$$
$$vi' = Di \cdot \sin q3 + Dq \cdot \cos q3$$
$$vq' = Di \cdot \cos q3 - Dq \cdot \sin q3$$

Zu diesem Zweck ist die Mischereinheit MA mit vier Multiplizierern M1, M2, M3, M4, einem Addierer G1 und einem Subtrahierer G2 und die Mischereinheit MB mit vier Multiplizierern M5, M6, M7, M8, einem Addierer G3 und einem Subtrahierer G4 versehen. Aus den Signalen ui', uq', vi' und vq' werden über je ein Tiefpassfilter F1, F2, F3 und F4 vier Signale ui, uq, vi bzw. vq gewonnen, aus denen mit Hilfe von vier Multiplizierern M11, M12, M13, M14, zwei Addierern A1, A2 und gegebenanfalls einem Radizierer RD die Signale Sd und g3 nach den Formeln

$$Sd = vi \cdot ui + vq \cdot uq$$
$$g3 = +\sqrt{ui^2 + uq^2}$$

gebildet werden. Der Ausgang des Radizierers RD ist zudem über einen Bandpass BP mit den Eingängen zweier weiterer Multiplizierer M15 und M16 verbunden, die folgende Signale liefern:

$$Sa' = g3' \cdot \sin Sr$$
$$Se' = g3' \cdot \cos Sr$$

worin g3' das gefilterte Signal g3 ist. Nach Filterung in je einem Tiefpass F5 und F6 erscheinen schliesslich daraus die gemittelten Fehler-Signale Sa bzw. Se, die zur Steuerung des Winkelservos WS (Fig. 1) benötigt werden. Der Fehlerdetektor FD kann noch mit einem Frequenzfehlerdetektor oder Frequenzsucher FS nach Fig.5 versehen sein. Dieser Frequenzsucher FS weist zwei Tiefpässe TP1 und TP2 auf, um aus den Signalen ui' und uq' die Signale ui" bzw. uq" auszufiltern, sowie zwei Muitiplizierer M9 und M10 und einen Addierer A3 mit einem nachgeschalteten Tiefpass TP3, um aus dem Summensignal

$$Sk'' = ui''^2 + uq''^2$$

das gefilterte Signal Sk' zu gewinnen. Mit dem Ausgangssignal Sk eines Schwellwertschalters SW, in dem das Signal Sk' mit einem Referenzsignal verglichen wird, kann die Bandbreite der Filter F1 bis F4 (Fig.5) beispielsweise auf einen anderen Wert umgeschaltet werden. Selbstverständlich könnten bei einem geeigneten Frequenzsucher die Filter F1 bis F4 gemeinsam oder individuell für mehrere Bandbreiten stufenweise umschaltbar sein. Für gewisse Anwendungen kann der Frequenzsucher FS entfallen.

In den Figuren 1 bis 5 ist ein Folge-Radargerät mit Quadraturkanal und Kegelabtastung beschrieben. Für den Zweck der vorliegenden Erfindung kann jedoch das Radargerät auch ohne Quadraturkanal arbeiten, wobei dann die Elemente PH, MS4 (Fig. 1); SDQ, AQ, BQ, VSQ, VDO (Fig.3); MX2, MX4, AD, SU (Fig.4) und M3, M4, M7, M8, G1, G2, G3, G4 (Fig.5) entfallen und Sq = 0 und Dq = 0 gilt.

Das Radargerät nach Fig. 1 bis 5 funktioniert folgendermassen:

Aus den empfangenen Echosignalen werden im Fehlerdetektor FD drei Fehlersignale Sd, Se, Sa (Fig.5) für Entfernung, Elevation und Azimut gewonnen, die mit unerwünschten Störsignalen behaftet sein können. Für den Zweck der Erfindung ist es jedoch belanglos, ob nur ein Fehlersignal, zwei oder alle drei erzeugt und verwendet werden. Zur Erzeugung von mindestens einem dieser drei Fehlersignale Sd, Se und/oder Sa werden in einem herkömmlichen Radargerät ohnehin mindestens ein Summensignal Si und ein Differenzsignal Di (Fig.5) und gegebenenfalls ein Quadratur-Summensignal Sq und ein Quadratur-Differenzsignal Dq (Fig.5) verwendet. Zur Erzeugung von mindestens einem der drei Fehlersignale Sd, Se, Sa jedoch mit einer erhöhten Unterdrückung der unerwünschten Störeffekte ist bei einem Radargerät gemäss der Erfindung das zusätzliche vom Signalgenerator SG (Fig.4) erzeugte Bezugssignal q3 von Bedeutung, wobei gemäss Fig.5 die Signale Sd, Se und Sa Funktionen vom Signal q3 darstellen. Da das Signal q3 im Signalgenerator SG neu erzeugt wird und daher weitgehend frei von Störeffekten ist, sind keine Störfehler in den Signalen Si, Sq, Di, Dq enthalten, die mit Störfehlern des Signals q3 korreliert wären, so dass auch die Signale Sd, Se und Sa weitgehend frei von Störfehlern sind. Für die Ausgangssignaie Si, Sq, Di und Dq der Videodoppler-Schaltung gemäss Fig.3 gelten die Ausdrücke

$$Di = e \cdot D1 \cdot \sin q1 + n1; \quad Dq = e \cdot D1 \cdot \cos q1 + n1q$$
$$S1 = S2 \cdot \sin q2 + n2i; \quad Sq = S2 \cdot \cos q2 + n2q$$

worin q1 und q2 die Momentanphasen der Dopplerausgangssignale, e ein Mass für das Vorzeichen und die Grösse einer Ablage in der Entfernung, S2 die Amplitude des Summensignals, D1 die maximale Amplitude des Differenzsignals und n1i, n1q, n2i und n2q Störsignale sind. Selbstverständlich sind die Werte q1, q2, n1i, n1q, n2i und n2q und daher auch Di, Si, Dq, Sq Funktionen der Zeit.

Der Nutzanteil der Signale Di und Si bzw. Dq und Sq, die in der Video-Doppler-Schaltung VDS erzeugt werden, ist mindestens angenähert in Phase für ein positives Fehlersignal (e = positiv) und in Gegenphase für ein negatives Fehlersignal (e = negativ). Daher gilt

$$q1 \cong q2$$

Für das Fehlersignal Sd des Fehlerdetektors FD (Fig.5) gilt

$$Sd = vi \cdot ui + vq \cdot uq$$

mit den Mittelwerten vi =

$$\overline{vi'}; \quad vq = \overline{vq'}; \quad ui = \overline{ui'}; \quad uq = \overline{uq'}$$

Dabei ist vi' = Di·sin q3 + Dq·cos q3 = $\frac{e \cdot D1}{2}$ (cos (q2-q3)-cos (q2+q3)) + n1i·sin q3 + $\frac{e \cdot D1}{2}$(cos (q2-q3) + cos(q2+q3)) + n1q·cos q3

und somit nach der Mittelung durch Filterung

$$vi = e \cdot D1 \cdot \cos (q2-q3) + n1'$$

Entsprechendes gilt für

$$ui = S2 \cdot \cos(q2-q3) + n2'$$
$$vq = e \cdot D1 \cdot \sin (q2-q3) + n1''$$
$$uq = S2 \cdot \sin (q2-q3) + n2''$$

Daraus ergibt sich als Ausgangssignal des Fehlerdetektors nach Einsetzen der obigen Ausdrücke

$$Sd = e \cdot D1 \cdot S2 + ncg$$

und als zu regelndes Signal auf analoge Weise

$$g3 = S2 + ncg$$

worin ncs und ncg das resultierende Rauschen aus n1', n2', n1'' und n2'' ist. Da die letzten Formeln unabhängig von der Phasendifferenz (q2-q3) sind, erscheint ein sauberes Signal Sd als Mass für die Ablage e und ein sauberes Signal g3 als Mass für die Amplitude S2 des Summensignals ohne Komponenten aus diesen Phasen. Ein weiterer Vorteil dieser Schaltung besteht darin, dass sie keiner Umschaltung wie beim Stand der Technik bedarf. Dabei können verschiedene Grade der Rauschunterdrückung durch veränderliche Zeitkonstanten tz bei der Mittelwertbildung der Filter F1, F2, F3, F4 (Fig.5) berücksichtigt werden. Eine Bedingung an die Phasendifferenz q2-q3 entfällt vollständig. Die Bildung der Fehlersignale Sa, Se und Sd ist somit bei beliebigen Phasen q3 = ∫w3·dt möglich. Eine Rauschunterdrückung wird dabei jedoch nur erreicht, wenn der Zeitraum tz für die Mittelwertbildung gross genug ist und der Absolutwert der Kreisfrequenzabweichung einen Wert △ W aufweist, für den die Bedingung

$$- Wo'max < \triangle W = \overline{(W2 - W3)} = \overline{\frac{d (q2 - q3)}{dt}} < + Wo'max$$

gilt. Diese Bedingung kann durch den eingeschwungenen Signalgenerator SG nach der Erfindung viel leichter und sicherer erfüllt werden, als jene andere Bedingung, die gemäss dem Stand der Technik erfüllt werden soll.

Der Signalgenerator SG nach Fig.4 ohne Quadraturkanal, das heisst bei Wegfall der Elemente MX2 und MX4 und Überbrückung der Bauteile AD und SU, funktioniert in der Weise, dass der Null-Frequenz-Diskriminator NFD eingangsseitig mit je einem Signal Si·cos q3 und Si·sin q3 beaufschlagt ist und sein Ausgangssignal △ W' einen Gleichspannungsanteil aufweist, der mindestens angenähert ein Mass für die Kreis-Frequenzabweichung △ W ist, und dessen Vorzeichen gleich dem Vorzeichen der Frequenzabweichung ist, die der Phasenfolge der beiden Eingangssignale des Null-Frequenz-Diskriminators NFD entspricht. Dies erlaubt positive und negative Abweichungen von der gewünschten Referenzfrequenz anhand der Phasenbeziehung zwischen den beiden Eingangssignalen zu unterscheiden. Durch den fakultativ nachschaltbaren Integrator J3 wird aus dem Signal $\triangle$ W das Signal Wo gewonnen, dem mit Hilfe des Addierers ADD das viel schneller veränderliche Signal W3'' addiert wird.

Der Frequenzintegrator FJ ist derart gesteuert, dass er das Signal W3' W3'' + Wo, das heisst die angenäherte Doppler-Kreisfrequenz des Zielechos, integriert. Das damit entstehende Signal q3' stellt eine ständig zu- oder abnehmende Phase dar, die man sich wegen ihrer Mehrdeutigkeit als sägezahnförmig vorstellen kann. Für das Signal q3' gilt

$$q3' = \int W3'(t) \cdot dt$$

Das so entstandene Sägezahnsignal wird mit dem Triggersignal St nun prf-synchron abgetastet und gehalten, wobei das Steuersignal q3 entsteht. Ferner gilt

$$\left| \overline{\frac{d(q2-q3)}{dt}} \right| = \left| \overline{(W2-W3)} \right| < Wo'max$$

oder

$$\overline{(q2-q3)} = \int \overline{\triangle W \cdot dt} = Q$$

mit: W3     =     abgetastete angenäherte Dopplerkreisfrequenz des Zielechos

      W2     =     dq2/dt = abgetastete Kreisfrequenz des Zielechos

      Wo'max     =     maximal zulässiger Kreisfrequenzfehler

      Q     =     beliebige und langsam veränderliche Phase

      $\triangle$ W     =     mittlerer Kreisfrequenzfehler

Aus der Phase q3 lässt sich jederzeit sowohl sin q3 als auch cos q3 erzeugen. Der Wert $\triangle$ W muss nicht Null, wie beim Stand der Technik, sondern bloss hinreichend klein sein. Dabei gilt Q =

$$\int \overline{\triangle W.dt} = \int \overline{(W2-W3)\,dt} = \overline{(q2-q3)}.$$

Die Phase Q kann beliebig sein und sich sogar langsam verändern, solange die Bedingung

$$\left| \frac{dQ}{dt} \right| < Wo'max$$

erfüllt ist. Diese Bedingung ist in der Praxis viel einfacher und bei gestörtem zweitem Ausgangssignal viel sicherer zu erreichen als diejenige, die beim bekannten Verfahren erforderlich ist.

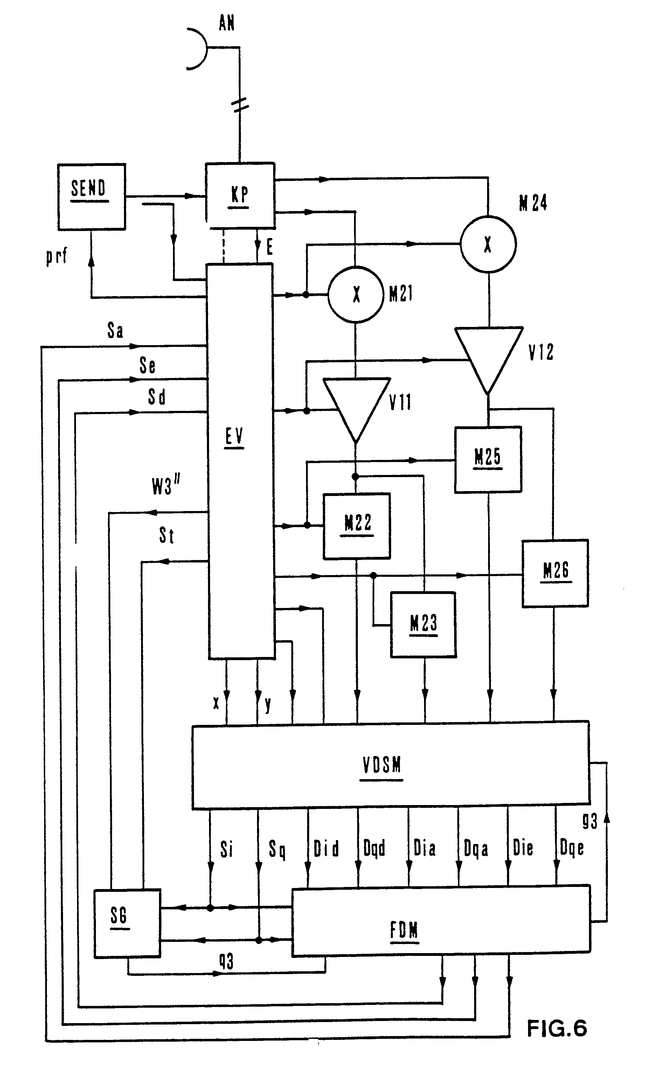

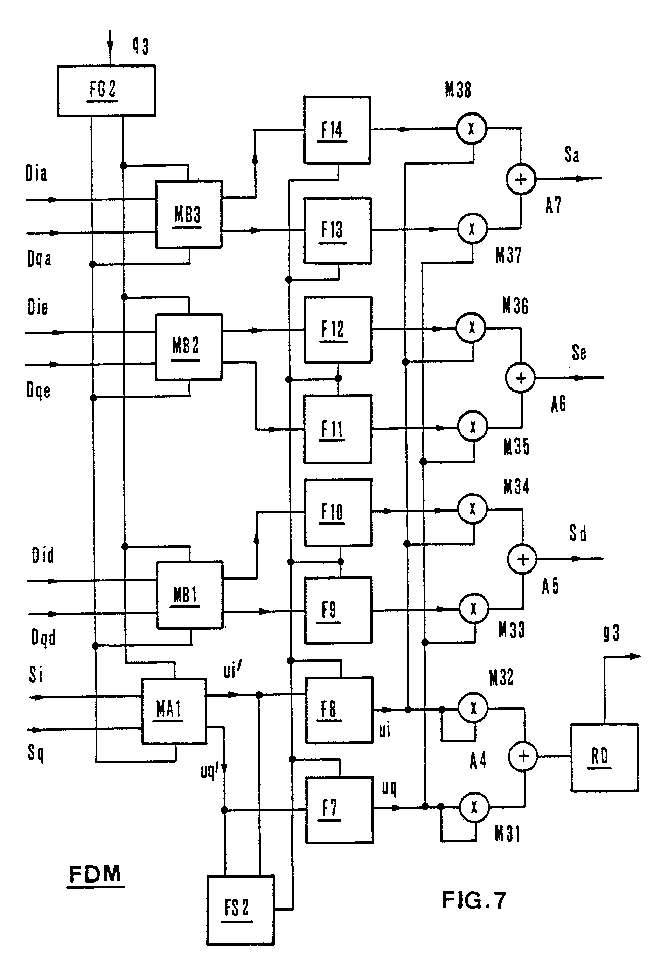

Das Monopuls-Folgeradar nach Fig.6 weist eine Monopuls-Video-Doppler-Schaltung VDSM sowie eine Duplexer- und Komparatorschaltung KP auf, an die eine Monopuls-Antenne AN, ein Sender SEND und eine Empfangsvorrichtung EV wie die Vorrichtung EV in Fig.1 angeschlossen sind. Die Schaltung VDSM ist im Prinzip gleich wie die entsprechende VDS nach Fig.3 aufgebaut, jedoch für Monopulsbetrieb erweitert. Dieses Folgeradar ist mit einem Azimut- und Elevationskanal versehen, wozu einerseits die Mischer M21, M22, M23 und der Verstärker V11 und andererseits die Mischer M24, M25, M26 und der Verstärker V12 vorgesehen sind. Das Folgeradar nach Fig.6 weist zudem einen Monopulsfehlerdetektor FDM auf, der anhand von Fig.7 näher erläutert werden soll. Dieser Fehlerdetektor FDM (Fig.7) weist drei Vorrichtungen auf, die zur Erzeugung der drei Steuersignale Sa, Se bzw. Sd für die Nachsteuerung der Servos dienen. Jede dieser drei Vorrichtungen ist ähnlich aufgebaut wie die entsprechende Vorrichtung des in Fig.5 dargestellten Fehlerdetektors FD zur Erzeugung des Steuersignals Sd. So weist beispielsweise eine dieser Vorrichtungen (Fig.7) die Elemente MB1, F9, F10, M33, M34 und A5 auf, die den Elementen MB, F3, F4, M13, M14 bzw. A2 entsprechen. Die Vorrichtungen gemäss Fig.7 sind eingangsseitig mit den Differenzsignalen Dia, Dqa für das Azimut, Die, Dqe für die Elevation bzw. Did, Dqd für die Distanz beaufschlagt. Da diese Differenzsignale in gleicher Weise behandelt werden, ist es möglich, sie undifferenziert mit den Ausdrücken Di, Dq zu bezeichnen, um auszudrücken, dass eine mathematische Formel auf jedes dieser Signale anwendbar ist. Insbesondere kann die Bezeichnung der Signale Si, Sq, g3, q3, Sa, Se, Sd usw. dieselbe sein, unabhängig davon, ob es sich um ein Monopulsradar (Fig.6) oder ein Kegelabtastradar (Fig. 1) handelt. Dabei kann beispielsweise S = Sa oder S = Se oder S = Sd sein. Das Folgeradar nach Fig.6 weist zudem einen Signalgenerator SG auf, der nach Fig.4 aufgebaut ist.

Die angegebene Formel für S kann wie folgt verallgemeinert werden:

$$S = f1 (Ui1 \cdot vi + Uq1 \cdot vq)$$

mit Ui1 = fi1 (u1)

und Uq1 = fq1 (uq)

Beispiel 1 : Ui1 = sign(ui) Uq1 = sign (uq)

Beispiel 2 : Ui1 = ui Uq1 = uq

Beispiel 3 : $S = \text{sign} (Ui1 \cdot vi + Uq1 + vq) \cdot \sqrt{|(Ui1 \cdot vi + Uq1 \cdot vq)|}$

Beispiel 4 : $S = ui \cdot vi + uq \cdot vq$

Die angegebene Formel für g3 kann wie folgt verallgemeinert werden:

$$g3 = f2(Ui2 \cdot ui + Uq2 \cdot uq)$$

mit Ui2 = fi2 (ui)

und Uq2 = fq2 (uq)

Beispiel 5 : Ui2 = sign (ui)

Beispiel 6: Ui2 = ui

Beispiel 7 : Uq2 = sign (uq)

Beispiel 8 : Uq2 = uq

Beispiel 9 : $g3 = +\sqrt{Ui2 \cdot ui + Uq2 \cdot uq}$

Beispiel 10: $g3 = (Ui2u \cdot ui + Uq2 \cdot uq)$

Durch Anwendung geeigneter Funktionen f1, f2 usw. kann eine starke Rauschunterdrückung gemäss dem allgemeinen Erfindungsgedanken zusammen mit anderen Vorteilen erreicht werden.

Das Signal g3 wird zur Normierung der Fehlersignale S, beispielsweise S = Sa bzw. S = Se bzw. S = Sd, verwendet. In den Schaltungen nach Fig.5 und 6 können regelbare Verstärker in einige oder alle Signalpfade eingefügt werden, die zu den Signalen Sa, Se oder Sd führen. In diesem Fall müssen die Verstärker VSI, VDI, VSQ bzw. VDQ (Fig.3) nicht regelbar sein. Dadurch können die Fehlersignale S ebensogut normiert werden.

Schliesslich sei noch bemerkt, dass der Signalgenerator SG nach der vorliegenden Erfindung keine Phasenschloss-Schaltung sondern eine Frequenzschloss-Schaltung benötigt, deren Arbeitsweise aus der EP-PS-0 014 242, Seite 11, Zeilen 22-26 bekannt ist.

**Patentansprüche**

1. Radargerät zur automatischen Verfolgung eines bewegten Zieles mit
- einer für die Zielverfolgung geeigneten Antennenerinrichtung (A, AS; AN, KP) wie zum Beispiel einer Kegelabtast- oder einer Monopulsantenneneinrichtung,
- einem mit der Antenneneinrichtung gekoppelten Sender (SEND),
- einer mit der Antenneneinrtchtung gekoppelten Empfangsvorrichtung (EV) zur Erzeugung von Video-Dopplersignalen durch kohärente Detektion und Filterung von Echosignalen eines verfolgten Ziels,
- einer Video-Dopplerschaltung (VDS), die eine Distanztorschaltung (AI, BI, SDI) umfass und durch Addition und Subtraktion von für zwei aneinander angrenzende Entfernungsabschnitte erhaltene Ausgangssignale der Distanztorschaltung ein Summensignal Si sowie ein Differenzsignal Di erzeugt,
- einem Signalgenerator (SG) zur Erzeugung eines zeitabhängigen Bezugsignals q3 mit einer Frequenz, die der Frequenz des grobgefilterten Summensignals Si entspricht,
- einem Fehlerdetektor (FD) zur Erzeugung eines Distanzfehlersignals Sd aus dem Summen- und Differenzsignal sowie aus dem Bezugssignal,
- einem von dem Distanzfehlersignal gesteuerten Distanzservo (DS),

dadurch gekennzeichnet, dass der Fehlerdetektor (FD) Mittel (MA, MB, FG2) zur Bildung der Produktsignale

$$ui' = Si \cdot \sin q3$$
$$uq' = Si \cdot \cos q3$$
$$vi' = Di \cdot \sin q3$$
$$vq' = Di \cdot \cos q3$$

umfasst und ferner Einrichtungen (F1, F2, F3, F4) zur Bildung der zeitlichen Mittelwerte ui, vi, uq und vq aus den Produktsignalen sowie Schaltungen (M13, M 14, A2) zur Bildung des Fehlersignals Sd gemäss einer der folgenden Beziehungen aufweist:

$$Sd = vi \cdot ui + vq \cdot uq \text{ oder } Sd = vi \cdot \text{sign}(ui) + vq \cdot \text{sign}(uq).$$

2. Radargerät nach Anspruch 1, dadurch gekennzeichnet, dass der Fehlerdetektor (FD) ferner Mittel (M11, M12, A1, RD) zur Erzeugung eines der Normierung des Fehlersignals dienenden Signals g3 gemäss einer der folgenden Beziehungen aufweist:

$$g3 = (ui^2 + uq^2)^n \text{ oder } g3 = (ui \cdot \text{sign}(ui) + uq \cdot \text{sign}(uq))^n \text{ mit } n = 1 \text{ oder } n = 1/2.$$

3. Radargerät zur automatischen Verfolgung eines bewegten Zieles mit
- einer für die Zielverfolgung geeigneten Kegelabtast-Antennenerinrichtung (A, AS),
- einem mit der Antenneneinrichtung gekoppelten Sender (SEND),

**0 114 196**

- einer mit der Antenneneinrichtung gekoppelten Empfangsvorrichtung (EV) zur Erzeugung von Video-Dopplersignalen durch kohärente Detektion und Filterung von Echosignalen eines verfolgten Zieles,

- einer Video-Dopplerschaltung (VDS), die eine Distanztorschaltung umfasst und durch Addition von für zwei aneinander angrenzende Entfernungsabschnitte erhaltene Ausgangssignale der Distanztorschaltung ein Summensignal Si erzeugt,

- einem Signalgenerator (SG) zur Erzeugung eines zeitabhängigen Bezugsignals q3 mit einer Frequenz, die der Frequenz des grobgefilterten Summensignals Si entspricht,

- einem Fehlerdetektor (FD) zur Erzeugung eines Winkelfehlersignals Sa, Se aus dem Summensignal sowie aus dem Bezugssignal,

- einem von dem Winkelfehlersignal gesteuerten Winkelservo (WS), <u>dadurch gekennzeichnet</u>, dass der Fehlerdetektor (FD) Mittel (MA, FG2) zur Bildung der Produktsignale

$$ui' = Si \cdot \sin q3$$
$$uq' = Si \cdot \cos q3$$

umfasst und ferner Einrichtungen (F1, F2) zur Bildung der zeitlichen Mittelwerte ui und uq aus den Produktsignalen sowie Schaltungen (M11, M12, A1, RD) zur Bildung eines der Normierung des Fehlersignals dienenden Signals g3 gemäss einer der folgenden Beziehungen aufweist:

$$g3 = (ui^2 + uq^{22})^n \text{ oder } g3 = (ui \cdot \text{sign}(ui) + uq \cdot \text{sign}(uq))^n$$

mit $n = 1$ oder $n = 1/2$,

und dass der Fehlerdetektor (FD) Mittel (BP, FG3, M15, M16) zur Erzeugung eines Azimutwinkelfehlersignals Sa' und/oder eines Elevationswinkelfehlersignals Se' nach folgenden Beziehungen aufweist:

$$Sa' = g3' \cdot \sin Sr \text{ bzw. } Se' = g3 \cdot \cos Sr$$

wobei g3' durch Filterung von g3 gebildet und Sr ein von der Antenneneinrichtung (A, AS) geliefertes, für die momentane Phasenlage der Kegelabtastung repräsentatives

4. Radargerät nach Anspruch 2 oder 3, <u>dadurch gekennzeichnet</u>, dass eine AVR-Schaltung zur Regelung des Signals g3 auf einen konstanten Wert vorgesehen ist.

5. Radargerät nach einem der vorhergehenden Ansprüche, <u>dadurch gekennzeichnet</u>, dass die Empfangsvorrichtung (EV) und die Video-Dopplerschaltung (VDS) jeweils einen Quadraturkanal zur Erzeugung der dem Summensignal Si und gegebenenfalls dem Differenzsignal Di entsprechenden Quadratursignale Sq bzw. Dq aufweisen, und dass die Mittel zur Bildung der Produktsignale so beschaffen sind, dass sie diese Signale in Abweichung von den genannten Beziehungen für ui', uq', vi' oder vq' gemäss folgenden Beziehungen bestimmen:

$$ui' = Si \cdot \sin q3 + Sq \cdot \cos q3$$
$$uq' = Si \cdot \cos q3 - Sq \cdot \sin q3$$
$$vi' = Di \cdot \sin q3 + Dq \cdot \cos q3$$
$$vq' = Di \cdot \cos q3 - Dq \cdot \sin q3.$$

6. Radargerät nach einem der Ansprüche 1 bis 5, <u>dadurch gekennzeichnet</u>, dass der Signalgenerator (SG) eine Frequenzschloss-Schaltung ist.

## Claims

1. A radar device for the automatic tracking of a moving target comprising:

-an antenna device (A, AS; AN, KP) suitable for target tracking, such as a conical scanning or monopulse antenna device, for example,

-a transmitter (SEND) coupled to the antenna device,

-a receiving device (EV) coupled to the antenna device and generating video Doppler signals by coherent detection and filtering of echo signals of a tracked target,

-a video Doppler circuit (VDS) which comprises a range gate circuit (A1, B1, SD1) and produces a sum signal Si and a difference signal Di, by the addition and subtraction of output signals from the range gate circuit for two mutually-adjacent range sections,

-a signal generator (SC) which generates a time-dependent reference signal q3 with a frequency which corresponds to the frequency of the coarse-filtered sum signal Si,

-an error detector (FD) which generates a range error signal Sd from the sum and difference signal and from the reference signal,

-a range servo (DS) which is controlled by the range error signal,

<u>characterised in that</u> the error detector (FD) comprises means (MA, MB, FG2) for the formation of the product signals:

$$ui' = Si \cdot \sin q3$$
$$uq' = Si \cdot \cos q3$$
$$vi' = Di \cdot \sin q3$$
$$vq' = Di \cdot \cos q3$$

and also comprises devices (F1, F2, F3, F4) for the formation of the mean time values ui, vi, uq and vq of the product signals, and circuits (M13, M14, A2) for the formation of the error signal Sd in accordance with one of the following equations:

8

$$Sd = vi \cdot ui + vq \cdot uq$$
or $\quad Sd = vi \cdot sign(ui) + vq \cdot sign(uq)$.

2. A radar device as claimed in Claim 1, <u>characterised in that</u> the error detector (FD) also comprises means (M11, M12, A1, RD) for the generation of a signal g3, which serves to standardise the error signal, in accordance with one of the following equations:

$$g3 = (ui^2 + uq^2)^n$$
or $\quad g3 = [ui \cdot sign(ui) + uq \cdot sign(uq)]^n$
where $\quad n = 1$ or $n = 1/2$.

3. A radar device for the automatic tracking of a moving target comprising:
- a conical scanning antenna device (A, AS) suitable for target tracking,
- a transmitter (SEND) coupled to the antenna device,
- a receiving device (EV) coupled to the antenna device and producing video Doppler signals by coherent detection and filtering of echo signals of a moving target,
- a video Doppler circuit (VDS) comprising a range gate circuit and producing a sum signal Si by the addition of output signals of the rage gate circuit obtained for two mutually adjacent range sections,
- a signal generator (SG) which generates a time-dependent reference signal q3 with a frequency which corresponds to the frequency of the coarse-filtered sum signal Si,
- an error detector (FD) which generates an angle error signal Sa, Se from the sum signal and the reference signal,
- an angle-servo (WS) which is controlled by the angle error signal,
<u>characterised in that</u> the error detector (FD) include means (MA, FG2) which form the product signals:

$$ui' = Si \cdot sin\ q3$$
$$uq' = Si \cdot cos\ q3$$

and also comprises devices (F1, F2) for the formation of the mean time values ui and uq from the product signals, and circuits (M11, M12, A1, RD) which form a signal g3 to standardise the error signal, in accordance with one of the following equations:

$$g3 = (ui^2 + uq^2)n$$
or $\quad g3 = [ui \cdot sign(ui) + uq \cdot sign(uq)]^n$
where $\quad n = 1$ or $n = 1/2$,

and that the error detector (FD) comprises means (BP, FG3, M15, M16) for the generation of an azimuth angle error signal Sa' and/or an elevation angle error signal Se' in accordance with the following equations:

$$Sa' = g3' \cdot sinSr\ or\ Se' = g3' \cdot cosSr,$$

where g3' is formed by the filtering of g3 and Sr is supplied by the antenna device (A, AS) and is representative of the instantaneous phase position of the conical scanning.

4. A radar device as claimed in Claims 2 or 3, <u>characterised in that</u> a AVR-circuit is provided for regulating the signal g3 to a constant value.

5. A radar device as claimed in one of the preceding Claims, <u>characterised in that</u> the receiving device (EV) and the video Doppler circuit (VDS) each include a quadrature channel for the generation of the quadrature signals Sq and Dq, which correspond to the sum signal Si and where appropriate to the difference signal Di, and that the means which form the product signals are contrived to be such that they determine these signals not in accordance with the aforementioned equations for ui', uq' , vi' or vq' , but in accordance with the following equations:

$$ui' = Si \cdot sin\ q3 + Sq \cdot cos\ q3$$
$$uq' = Si \cdot cos\ q3 - Sq \cdot sin\ q3$$

$$vi' = Di \cdot sin\ q3 + Dq \cdot cos\ q3$$
$$vq' = Di \cdot cos\ q3 - Dq \cdot sin\ q3.$$

6. A radar device as claimed in one of Claims 1 to 5, <u>characterised in that</u> the signal generator (SG) is a frequency blocked circuit.

**Revendications**

1. Appareil radar servant à réaliser la poursuite automatique d'une cible mobile et comportant:
-un dispositif d'antenne (A, AS; AN, KP) convenant pour la poursuite de cibles ainsi que par exemple un dispositif d'antenne à balayage conique ou monopulsé,
-un émetteur (SEND) accouplé au dispositif d'antenne,
-un dispositif de réception (EV) accouplé au dispositif d'antenne et servant à produire des signaux Doppler vidéo au moyen d'une détection cohérente et d'un filtrage de signaux d'échos d'une cible poursuivie,
- un circuit Doppler vidéo (VDS), qui comporte un circuit à portes de distance (AI, BI, SDI) et produit un signal somme (Si) ainsi qu'un signal de différence (Di) par addition et soustraction de deux signaux de sortie, obtenus pour deux sections contiguës de distances, du circuit à portes de distance,
- un générateur de signaux (SG) servant à produire un signal de référence q3 qui dépend du temps et possède une fréquence correspondant à la fréquence du signal somme Si filtré de façon grossière,

- un détecteur d'erreur (FD) servant à produire un signal d'erreur de distance (Sd) à partir du signal somme et du signal de différence ainsi qu'à partir du signal de référence,

-un dispositif d'asservissement de distance (DS) commandé par le signal d'erreur de distance,

caractérisé par le fait que le détecteur d'erreur (FD) comporte des moyens (MA, MB, FG2) servant à former les signaux en forme de produits

$$ui' = Si \cdot \sin q3$$
$$uq' = Si \cdot \cos q3$$
$$vi' = Di \cdot \sin q3$$
$$vq' = Di \cdot \cos q3$$

et en outre des dispositifs (F1, F2, F3, F4) servant à former des valeurs moyennes dans le temps ui, vi, uq et vq à partir des signaux formés par les produits, ainsi que des circuits (M13, M14, A2) servant à former le signal d'erreur Sd conformément à l'une des relations suivantes:

$$Sd = vi \cdot ui + vq \cdot uq \quad \text{ou} \quad Sd = vi \cdot \text{sign}(ui) + vq \cdot \text{sign}(uq).$$

2. Appareil radar suivant la revendication 1, caractérisé par le fait que le détecteur d'erreur (FD) comporte des moyens (M11, M12, A1, RD) servant à produire un signal g3 servant à normaliser le signal d'erreur, conformément à l'une des relations suivantes:

$$g3 = (ui^2 + uq^2)^n \quad \text{ou} \quad g3 = (ui \cdot \text{sign}(ui) + uq \cdot \text{sign}(uq))^n \quad \text{avec } n = 1 \text{ ou } n = 1/2.$$

3. Appareil radar pour la poursuite automatique d'une cible mobile, comportant

-un dispositif d'antenne à balayage conique (A, AS) convenant pour la poursuite de cibles,

-un émetteur (SEND) accouplé au dispositif d'antenne,

-un dispositif de réception (EV) accouplé au dispositif d'antenne et servant à produire des signaux Doppler vidéo grâce à une détection cohérente et à un filtrage de signaux d'échos d'une cible mobile,

-un circuit Doppler vidéo (VDS), qui comporte un circuit de portes de distance et produit un signal somme Si par addition de signaux de sortie, obtenus pour deux sections contiguës de distance, du circuit de portes de distances,

-un générateur de signaux (SG) servant à produire un signal de référence q3 qui dépend du temps et possède une fréquence correspondant à la fréquence du signal somme Si filtré grossièrement,

-un détecteur d'erreurs (FD) servant à produire un signal d'erreur angulaire Sa, Se à partir du signal somme ainsi qu'à partir du signal de référence,

-un système d'asservissement angulaire (WS) commandé par le signal d'erreur angulaire, caractérisé par le fait que le détecteur d'erreurs (FD) comporte des moyens (MA, FG2) servant à former les signaux en forme de produits

$$ui' = Si \cdot \sin q3$$
$$uq' = Si \cdot \cos q3$$

et comporte en outre des dispositifs (F1, F2) servant à former les valeurs moyennes dans le temps ui et uq à partir des signaux formés par les produits, ainsi que des dispositifs (M11, M12, A1, RD) servant à former un signal g3, qui est utilisé pour normaliser le signal d'erreur, conformément à l'une des relations suivantes

$$g3 = (ui^2 + uq^2)^n \quad \text{ou} \quad g3 = (ui \cdot \text{sign}(ui) + uq \cdot \text{sign}(uq))^n \quad \text{avec } n = 1 \text{ ou } n = 1/2,$$

et que le détecteur d'erreur (FD) comporte des moyens (BP, FG3, M15, M16) servant à produire un signal d'erreur d'angle azimutal Sa' et/ou un signal d'erreur d'angle d'élévation Se' conformément aux relations suivantes:

$$Sa' = g3 \cdot \sin Sr \quad \text{et} \quad Se' = g3 \cdot \cos Sr,$$

g3' étant formé par filtrage de g3 et Sr étant un signal délivré par le dispositif d'antenne (A, AS) et représentatif de la position de phase instantanée du balayage conique.

4. Appareil radar suivant la revendication 2 ou 3, caractérisé par le fait qu'il est prévu un circuit (AVR) servant à régler le signal g3 à une valeur constante.

5. Appareil radar suivant l'une des revendications précédentes, caractérisé par le fait que le dispositif de réception (EV) et le circuit Doppler vidéo (VDS) comportent respectivement un canal de quadrature servant à produire les signaux en quadrature Sq et Dq, qui correspondent au signal somme Si et éventuellement au signal de différence Di, et que les moyens servant à produire les signaux en forme de produits sont agencés de telle sorte qu'ils déterminent ces signaux non pas conformément aux relations indiquées pour ui', uq', vi ou vq', mais conformément aux relations suivantes:

$$ui' = Si \cdot \sin q3 + Sq \cdot \cos q3$$
$$uq' = Si \cdot \cos q3 - Sq \cdot \sin q3$$
$$vi' = Di \cdot \sin q3 + Dq \cdot \cos q3$$
$$vq' = Di \cdot \cos q3 - Dq \cdot \sin q3.$$

6. Appareil radar suivant l'une des revendications 1 à 5, caractérisé par le fait que le générateur de signaux (SG) est un circuit à verrouillage de fréquence.

0 114 196

FIG.1

FIG.2

FIG.3

FIG.4

FIG.5

FIG.6

FIG.7

FDM